# EUROPÄISCHE PATENTANMELDUNG

(11) **EP 2 042 220 A1**
(43) Veröffentlichungstag der Anmeldung: **01.04.2009**
(21) Anmeldenummer: 08016832.1
(22) Anmeldetag: 25.09.2008
(51) Int. Cl.: A63F 13/02

(54) **Cyberpuppe**

(30) Priorität: 28.09.2007 DE 102007046869
(71) Anmelder: Stechmann, Gustaf, 22417 Hamburg (DE)
(72) Erfinder: Lyngeled, Klaus, 41679 Göteburg (SE)
(74) Vertreter: Groth, Wieland

(57) **Zusammenfassung**

Die Erfindung betrifft ein Videospielsystem mit einer Spielkonsole (1) und mit einem Bildschirm (2) und mit wenigstens einer Bewegungssensoren aufweisenden Spielpuppe (3) und wenigstens einer im Spielbetrieb ausgebildeten Verbindung (5, 6) zwischen der Spielkonsole (1) und der wenigstens einen Spielpuppe (3), über die Bewegungsdaten der Bewegungssensoren an die Spielkonsole (1) übertragbar sind und mit einem auf einem Speichermedium abgelegten Spielprogramm, das in die Spielkonsole (1) ladbar ist und das eine der wenigstens einen Spielpuppe (3) zugeordnete und durch sie steuerbare Bildschirmfigur (3a) auf dem Bildschirm (2) darstellt.

## Beschreibung

Die Erfindung betrifft ein Videospielsystem mit einer Spielkonsole mit einem Bildschirm und wenigstens einer Bewegungssensoren aufweisenden Spielpuppe. Die Erfindung betrifft auch eine Spielpuppe für das Videospielsystem, eine Verwendung der Spielpuppe, sowie ein Verfahren zur Durchführung eines Videospiels mit dem Videospielsystem.

### Stand der Technik

Spielkonsolen mit zugehörigen Steuergeräten für Videospiele, sind im Stand der Technik bekannt. Derartige Spielkonsolen werden z. B. als XBox 360 oder Playstation 3 und Nintendo Wii angeboten. Nintendo Wii zeichnet sich durch ein bewegungssensitives, mit der Spielkonsole über eine kabelfreie Verbindung wechselwirkendes Steuergerät Wii-Mote aus. Im erweiterten Sinne können auch Computer wie Windows PC und Apple Macintosh als Spielkonsolen verstanden werden.

Im Stand der Technik sind darüber hinaus auch Zubehörsets für die genannten Spielkonsolen bekannt. Beispielsweise ist ein Sport-Set für Wii auf dem Markt, das kleinformatige Tennisschläger und Golfschläger umfasst mit jeweils einer Aufnahme für das Wii-Mote. Entsprechend auf das Zubehör ausgerichtete Spielprogramme setzen die Bewegungen des Spielers mit dem kleinformatigen Schläger in Spielaktionen auf dem Bildschirm um.

Die bekannten Spielkonsolen, sowie deren Zubehör weisen den Nachteil auf, insbesondere für kleine Kinder nur schwer verständlich und handhabbar zu sein.

### Aufgabenstellung

Es ist daher Aufgabe der Erfindung, ein Videospielsystem zur Verfügung zu stellen, das auch für Kinder geeignet ist.

Es ist zweitens Aufgabe der Erfindung, eine kinderfreundliche Schnittstelle zwischen Spieler und Spielkonsole zur Verfügung zu stellen.

Es ist drittens Aufgabe der Erfindung, den Verwendungsbereich einer Spielpuppe zu erweitern.

Vierte Aufgabe der Erfindung ist es, ein Verfahren zur Durchführung eines Videospiels mit einem Videospielsystem zur Verfügung zu stellen.

### Beschreibung

Die erste Aufgabe wird durch ein Videospielsystem mit den Merkmalen des Anspruchs 1 gelöst. Das Videospielsystem weist ein auf einem Speichermedium wie einer DVD abgelegtes Spielprogramm auf, das durch ein Lesegerät in die Spielkonsole ladbar ist. Denkbar ist auch, das Spielprogramm über ein Netzwerk zu laden. Das Spielprogramm stellt unter anderem durch den Spieler steuerbare Bildschirmfiguren auf dem Bildschirm dar. Unter Bildschirmfiguren sind hier alle denkbaren, vorzugsweise beweglichen Verkörperungen zu verstehen, wie Personen, aber auch Tiere, Rennautos, Flugzeuge, Roboter, Action-Figuren usw.

Erfindungswesentlich an dem beanspruchten Videospielsystem ist die wenigstens eine den Bildschirmfiguren zugeordnete und Bewegungssensoren aufweisende Spielpuppe. Die Spielpuppe macht das Videospiel besonders Kindern zwischen drei und neun Jahren zugänglich.

Es sind Videospiele mit genau einer Spielpuppe, mit genau zwei Spielpuppen oder mehreren Spielpuppen denkbar. Die Bewegungssensoren sind in wenigstens einem separaten Steuergerät angeordnet. Ein separates Steuergerät ist vorzugsweise genau einer Spielpuppe zugeordnet. Wenn mit mehreren Spielpuppen gespielt werden soll, kann in jede der Spielpuppen ein separates Steuergerät eingesetzt werden. Hierbei soll separat so verstanden werden, dass das wenigstens eine Steuergerät ein begrenztes Bauteil ist, das aus der zugehörigen Spielpuppe auch leicht durch ein Kind entfernt werden kann. Das Steuergerät ist lösbar, vorzugsweise fest, insbesondere rutschfest, in der Aufnahme angeordnet, damit Bewegungen der Spielpuppe in Bewegungen des zugehörigen Steuergerätes umgesetzt werden.

Die Bewegungssensoren und weitere Sensoren einer Spielpuppe können vorzugsweise alle in dem genau einen zugehörigen Steuergerät vorgesehen sein. Das wenigstens eine Steuergerät kann zusammen mit der Spielkonsole für unterschiedliche Spiele zur Verfügung stehen. Das wenigstens eine Steuergerät und die Spielkonsole müssen nicht für die Anordnung in dem beanspruchten Videospielsystem ausschließlich vorgesehen sein. Das wenigstens eine Steuergerät kann auch in andere Videospielsysteme eingebaut werden. Dann wird in die Spielkonsole ein anderes Spiel vorzugsweise mittels eines DVD geladen und es steht ein anderes Spielsystem mit einem andersartigen Videospiel zur Verfügung.

Das erfindungsgemäße Steuergerät kann insbesondere das zu Wii gehörige Wii-Mote sein. Das erfindungsgemäße Videospielsystem umfasst eine über eine DVD oder einen Online-Anschluss in die Wii-Spielkonsole ladbare Spielsoftware.

Erfindungsgemäß werden Bewegungen der Spielpuppe durch die Bewegungssensoren detektiert und als Bewegungsdaten über die wenigstens eine Verbindung an die Spielkonsole übertragen. Die Verbindung ist vorzugsweise als Funkverbindung ausgebildet. Darunter soll hier eine zwischen der Spielkonsole und der Spielpuppe kabellose Verbindung verstanden werden. Es ist jedoch grundsätzlich auch denkbar, die wenigstens eine Verbindung als Kabelverbindung oder kabelgebundene Verbindung auszubilden.

Das Spielprogramm sieht vor, dass der Spielpuppe eine Bildschirmfigur zugeordnet ist und die Bildschirmfigur mittels der Spielpuppe steuerbar ist. Vorzugsweise übersetzt das geladene Spielprogramm die empfangenen Bewegungsdaten in Spielaktionen der Bildschirmfigur in einem auf dem Bildschirm dargestellten Spielraum.

Die Bewegungssensoren können dauerhaft in die Spielpuppe eingenäht sein. Es ist aber auch denkbar, die Bewegungssensoren in einem separaten Steuergerät vorzusehen. Das Steuergerät kann dabei ein zur betreffenden Spielkonsole gehöriges Steuergerät sein, beispielsweise das zum Nintendo Wii gehörige Wii-Mote.

In einer besonders bevorzugten Weiterbildung der Erfindung, weist die Spielpuppe eine Aufnahme für das separate Steuergerät mit vorzugsweise ausschließlich darin angeordneten Bewegungssensoren auf. Das Steuergerät ist in der Aufnahme z.B. durch eine Klemm- oder Schnappverbindung rutschfest angeordnet.

Erfindungsgemäße Spielprogramme können auch gleichzeitig mehrere Bildschirmfiguren erzeugen. Die Bildschirmfiguren brauchen dabei nicht immer unbedingt zu jeder Phase des Spiels auf dem Bildschirm sichtbar zu sein. Günstigerweise wird aber jeder Spielpuppe durch das Spielprogramm genau eine Bildschirmfigur zugeordnet, damit mehrere Spieler zusammen das Videospiel spielen können.

Die zweite Aufgabe wird durch eine Spielpuppe mit dem Merkmal des Anspruchs 6 gelöst.

Die Spielpuppe umfasst eine Aufnahme für das Bewegungssensoren aufweisende separate Steuergerät, wobei das Steuergerät rutschfest in der Aufnahme anordnenbar ist. Damit ist die Relativposition zwischen Aufnahme und Steuergerät auch während der Bewegung der Spielpuppe konstant. Das Steuergerät ist aus der Aufnahme entfernbar, um für andere Videospielsysteme verwendet werden zu können.

Das Steuergerät ist insbesondere auch in andere Spielzeugen, Sportgeräten u.ä. einsetzbar, um mit einer den anderen Spielzeugen, Sportgeräten u.ä. angepassten Spielsoftware ein neues Videospiel spielbar zu machen.

Die Aufnahme kann dazu Innenabmessungen aufweisen, die Außenabmessungen des Steuergerätes entsprechen, wobei eine Innenwandung der Aufnahme zumindest bereichsweise formschlüssig an einer Außenwandung des aufgenommenen Steuergerätes anliegt.

Vorzugsweise ist eine Länge der Aufnahme in einer Längsrichtung des aufgenommenen Steuergerätes so dimensioniert, dass das aufgenommene Steuergerät mit einem Ende aus der Aufnahme herausragt. An dem herausragenden Ende des Steuergerätes sind Sender und/oder Empfänger der Funkverbindung vorgesehen. Die Spielpuppe stört damit nicht die Übertragung der Bewegungsdaten.

Die Aufnahme kann eine Öffnung aufweisen, über die der Zugriff auf an einer Außenseite des aufgenommenen Steuergerätes angeordnete Steuerköpfe und Joysticks möglich bleibt.

Zur Ausbildung einer lösbaren aber dennoch rutschfesten Verbindung ist die Aufnahme günstigenfalls in Form einer u-förmigen Vertiefung ausgebildet, in welcher das Steuergerät passgenau Platz findet. Vorzugsweise ist die Vertiefung in einem Querschnitt quer zur Längsrichtung des Steuergerätes im Wesentlichen, vorzugsweise gleich bleibend, u-förmig ausgebildet.

Die Außenseite des Steuergerätes kann zusätzlich mit einem Filzstreifen überzogen sein, um die Kinder vor Verletzungen zu schützen.

Vorzugsweise ist die Spielpuppe in ihrer Größe und Materialbeschaffenheit derart ausgelegt, das Bewegungen der Spielpuppe durch den Spieler möglichst unmittelbar in Bewegungen des Steuergeräts umgesetzt werden können.

Das Steuergerät ist vorzugsweise das Wii-Mote und die Spielpuppe als menschenartiges Wesen ausgebildet. Es sind jedoch auch andere Ausführungsformen der Spielpuppe denkbar.

Besondere Ausführungsformen der Spielpuppe umfassen einen Schwanz, in dem eine Befestigung für einen an das Steuergerät angeschlossenen Joystick vorgesehen ist. Der Joystick ist über Schwanzbewegungen steuerbar. Damit sind zusätzliche Spielaktionen durchführbar. Der Schwanz kann rutschfest mit Weichgummi überzogen sein.

Denkbar ist auch der Einbau eines mit dem Steuergerät verbundenen Berührungssensors im Bauchbereich der Spielpuppe. Von dem Sensor detektierte Berührungen können vom Spielprogramm als eine Reaktion auf ein Kitzeln der Bildschirmfigur umgesetzt werden.

Die dritte Aufgabe wird durch die Verwendung einer Bewegungssensoren aufweisenden Spielpuppe als Schnittstelle zwischen einem Spieler und einer Spielkonsole gelöst, in die ein Spielprogramm geladen ist zur Auslösung von Spielaktionen einer durch das Spielprogramm dargestellten Bildschirmfigur.

Bei der Verwendung des Wii-Mote als Steuergerät, ist das Wii-Mote vorzugsweise in einer in einem Kopf der Spielpuppe vorgesehenen Aufnahme untergebracht. Durch Bewegungen des Kopfes der Spielpuppe kann die Bildschirmfigur in verschiedene Richtungen gesteuert werden.

Die erfindungsgemäße Verwendung gestattet auch herkömmlichen Spielpuppen, durch nur geringfügige Modifikation Teil des Videospielsystems zu werden. Insbesondere kann eine herkömmliche Spielpuppe durch Zusatz einer integralen Aufnahme aber auch durch lösbares Aufsetzen, Anschnallen o.ä. einer separaten Aufnahme für das Videospiel tauglich gemacht werden.

Die vierte Aufgabe wird auch durch ein Verfahren mit den Merkmalen des Anspruchs 13 gelöst. Zunächst wird das Spielprogramm von der DVD oder über ein Netzwerk in die Konsole geladen. Danach kann die Anzahl der Spieler abgefragt und festgelegt werden, die auch die Anzahl der Spielpuppen, der verwendeten Steuergeräte und der vom Spielprogramm aktivierten Bildschirmfiguren bestimmt. Die Steuergeräte werden in die Spielpuppen eingefügt. Das Videospiel wird gestartet. Die Bewegungen der Spielpuppen werden in Echtzeit in Spielaktionen der Bildschirmfiguren umgewandelt. Es sind Einzelspiele oder Spiele mit mehreren Spielern vorstellbar.

### Ausführungsbeispiel

Die Erfindung wird anhand eines Ausführungsbeispiels in einer Figur beschrieben. Dabei zeigt:

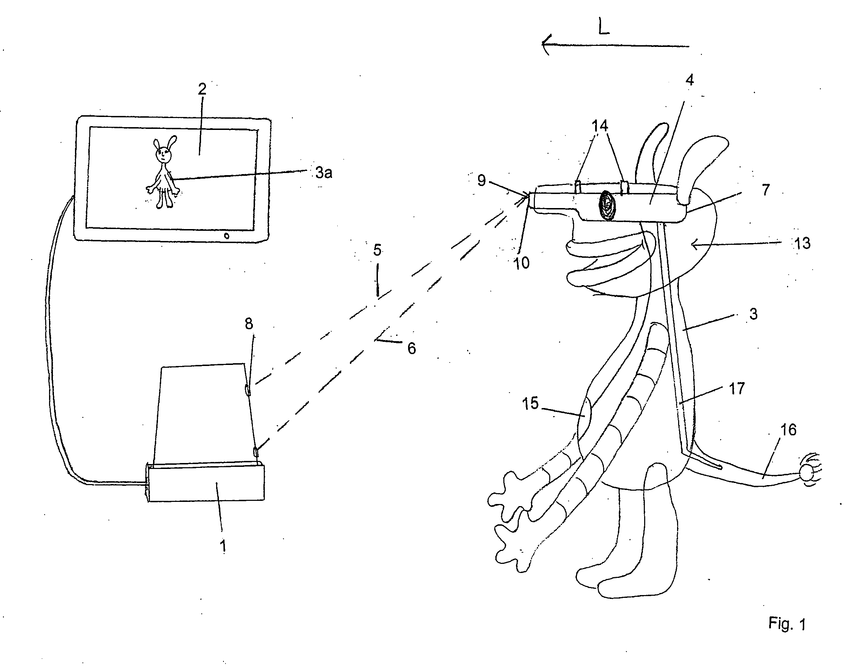

- Fig. 1: eine Spielkonsole mit einer Spielpuppe mit separatem Steuergerät.

In Fig. 1 ist eine Spielkonsole 1 Wii dargestellt. In der Spielkonsole 1 ist das Spielprogramm von einer DVD bereits geladen. Die Spielkonsole 1 erhält über drahtlose Verbindungen 5, 6 von einem Steuergerät 4, dem Wii-Mote, Bewegungsdaten und Spielbefehle. An die Spielkonsole 1 ist ein Bildschirm 2 angeschlossen. Der Bildschirm 2 ist auf einen (nicht eingezeichneten) Spieler gerichtet.

Die Aufnahme 7 ist in einem Querschnitt senkrecht zur Zeichenebene u-förmig ausgebildet. Das Steuergerät 4 ist von oben in die Aufnahme 7 der Spielpuppe 3 eingesetzt. Eine obere Seite des Steuergerätes 4 bleibt für den Spieler frei zugänglich. Die entlang der oberen Seite von Wii-Mote 4 vorgesehenen Steuerknöpfe 14 können weiterhin bedient werden.

Der Spieler nimmt an dem Videospiel teil, indem er die Spielpuppe 3 bewegt und dabei in Echtzeit Spielaktionen einer auf dem Bildschirm 2 durch das Spielprogramm erzeugten Bildschirmfigur 3a auslöst. Die Bewegungen der Spielpuppe 3 werden also auf eine auf dem Bildschirm 2 dargestellte Spielfigur 3a übertragen. Die Spielpuppe 3 ist Schnittstelle zwischen Spieler und Spielkonsole 1.

Die Spielkonsole 1 und das Steuergerät 4 sind zum einen über eine Positionsstrahlverbindung 5 miteinander verbunden. An der Spielkonsole 1 sind zwei Infrarotstrahler 8 vorgesehen, die mit einem an dem Steuergerät 4 angeordneten Infrarotrezeptor 9 zusammenwirken. Die Positionsstrahlverbindung ermöglicht die Bestimmung der Position der Spielpuppe 3 relativ zur Spielkonsole 1. Darüber hinaus weist das Steuergerät 4 integrierte Bewegungssensoren auf, die lineare Beschleunigungen oder Drehbewegungen registrieren. Die Bewegungsdaten werden über eine Bluetooth-Verbindung 6 zur Spielkonsole 1 übermittelt. Zwischen der Spielkonsole 1 und dem Steuergerät 4 findet durch die Infrarot- 5 und die Bluetooth-Verbindungen 6 ein kabelfreier Informationsaustausch statt.

Die in Fig. 1 dargestellte Spielpuppe 3 ist menschenartig und weist einen Kopf 13 auf, in dem die Aufnahme 7 für das Steuergerät 4 des Wii-Host-Systems vorgesehen ist. Das Steuergerät 4 ist hier das Wii-Mote 4. Ein Bluetooth-Sensor 10 ist wie auch der Infrarotrezeptor 9 im vorderen, aus der Aufnahme 7 herausragenden Ende des Wii-Mote 4 vorgesehen.

Wii-Mote ist rutschfest in der Aufnahme 7 angeordnet. Durch Bewegen der Spielpuppe 3 werden unmittelbar Bewegungen des Wii-Mote 4 erzeugt.

Spielprogramm und Spielpuppe 3 sind erfindungsgemäß aufeinander angepasst und abgestimmt. Das geladene Spielprogramm präsentiert dem Spieler einen Spielraum, dessen Ebenen, zeitliche Stationen usw. auf dem Bildschirm 2 dargestellt werden. Der Spieler benutzt die Spielpuppe 3, um mit dem Videospiel zu interagieren. Das Spielprogramm übersetzt die durch die Bewegung der Spielpuppe 3 erzeugten Bewegungsdaten in Spielaktionen. Dabei kann die Spielebene verlassen, innerhalb derselben Spielebene eine andere Position eingenommen werden ö. Ä. Die Veränderung des Spielzustandes der Bildschirmfigur 3a wird auf dem Bildschirm 2 angezeigt. Das Videospiel wird so lange fortgesetzt, bis ein Spielziel erreicht ist oder das Videospiel vom Spieler abgebrochen wird.

Eines der möglichen Spielprogramme gestattet das Laufen der Bildschirmfigur 3a nach vorn oder hinten, indem die der Bildschirmfigur 3a zugeordnete Spielpuppe 3 leicht von rechts nach links hin und her geschwenkt und gleichzeitig entweder nach vorn oder nach hinten bewegt wird.

Die Spielpuppe 3 kann durch hoch und runter Bewegen ein Springen der Bildschirmfigur 3a auslösen, um beispielsweise Hindernisse im Videospiel zu überspringen.

Durch Tanzbewegungen der Spielpuppe 3 kann die Bildschirmfigur 3a zum Tanzen veranlasst werden.

Die Spielpuppe 3 weist im Bauchbereich 15 einen Berührungssensor auf, der mit Wii-Mote 4 verbunden ist, um Kritzelbewegungen in Frequenz und Richtung am Bauch 15 der Spielpuppe 3 auf entsprechende Reaktionen der Bildschirmfigur 3a zu übertragen.

Durch Bewegen des Kopfes der Spielpuppe 3 kann ein Keks mit dem Mund der Bildschirmfigur 3a aufgefangen werden.

Das Spielprogramm gestattet die Auswertung von Wiegebewegungen der horizontal gehaltenen Spielpuppe 3. Nach einer einstellbaren Zeit fällt die Bildschirmfigur 3a in den Schlaf.

Durch plötzliche seitliche Bewegungen der Spielpuppe wird die Bildschirmfigur 3a zu Ausweichbewegungen, beispielsweise vor entgegenkommenden Flugkörpern o.Ä. veranlasst.

Die Spielpuppe 3 kann durch entsprechende Bewegungen zum Schwenken eines von der in einem Tunnel befindlichen Bildschirmfigur 3a ausgehenden Lichtkegels veranlasst werden.

Das zum Nintendo Wii gehörige Steuergerät Wii-Mote 4 verfügt über einen eingebauten Lautsprecher. Denkbar ist, Geräusche oder Sprachaufnahmen über den Lautsprecher wiederzugeben, so dass der Eindruck entsteht, die Spielpuppe spricht.

Die Spielpuppe 3 wird zusätzlich mit einem Schwanz 16 gesteuert, der intern über einem Joystick 17 mit Wii-Mote 4 verbunden ist. In der Spielpuppe 3 ist ein Lautsprecher zum Anschluss an Wii-Mote 4 vorgesehen.

### Bezugszeichenliste

- 1: Spielkonsole
- 2: Bildschirm
- 3: Spielpuppe
- 3a: Bildschirmfigur
- 4: Steuergerät
- 5: Infrarot-Verbindung
- 6: Bluetooth-Verbindung
- 7: Aufnahme
- 8: Infrarotstrahler
- 9: Infrarotrezeptor
- 10: Bluetooth-Sensor
- 11: -
- 12: -
- 13: Kopf
- 14: Steuerknöpfe
- 15: Bauch
- 16: Schwanz
- 17: Joystick

## Patentansprüche

1. Videospielsystem mit einer Spielkonsole (1) und
mit einem Bildschirm (2) und
mit wenigstens einer Bewegungssensoren aufweisenden Spielpuppe (3) und wenigstens einer im Spielbetrieb ausgebildeten Verbindung (5, 6) zwischen der Spielkonsole (1) und der wenigstens einen Spielpuppe (3), über die Bewegungsdaten der Bewegungssensoren an die Spielkonsole (1) übertragbar sind und
mit einem auf einem Speichermedium abgelegten Spielprogramm, das in die Spielkonsole (1) ladbar ist und das eine der wenigstens einen Spielpuppe (3) zugeordnete und durch sie steuerbare Bildschirmfigur auf dem Bildschirm (2) darstellt, **dadurch gekennzeichnet, dass** die Bewegungssensoren in wenigstens einem separaten Steuergerät (4) vorgesehen sind und die wenigstens eine Spielpuppe (3) eine Aufnahme (7) für das wenigstens eine separate Steuergerät (4) aufweist, in der das separate Steuergerät (4) lösbar anordnenbar ist.

2. Videospielsystem nach Anspruch 1,
**dadurch gekennzeichnet, dass** die Bewegungsdaten durch das Spielprogramm in Spielaktionen der ihnen zugeordneten Bildschirmfigur (3a) in einem auf dem Bildschirm (2) dargestellten Spielraum übersetzbar sind.

3. Videospielsystem nach Anspruch 1 oder 2,
**gekennzeichnet durch** wenigstens ein Steuergerät (4) und **dadurch**, dass im Betrieb wenigstens eine Verbindung (5, 6) zwischen der Spielkonsole (1) und dem Steuergerät (4) ausgebildet ist und einer an der wenigstens einen Spielpuppe (3) vorgesehenen Aufnahme (7), in der das wenigstens eine Steuergerät (4) rutschfest angeordnet ist.

4. Videospielsystem nach Anspruch 3,
**dadurch gekennzeichnet, dass** an jeder Spielpuppe (3) genau eine Aufnahme (7) für jeweils genau ein Steuergerät (4) vorgesehen ist.

5. Videospielsystem nach wenigstens einem der Ansprüche 1 bis 4,
**dadurch gekennzeichnet, dass** die wenigstens einen Verbindung (5, 6) eine Funkverbindung aufweist.

6. Spielpuppe, insbesondere für ein Videospielsystem nach wenigstens einem der Ansprüche 1 bis 5,
mit einer Aufnahme (7) für ein Bewegungssensoren aufweisendes separates Steuergerät (4), in der das separate Steuergerät (4) lösbar anordnenbar ist.

7. Spielpuppe nach Anspruch 6,
**dadurch gekennzeichnet, dass** die Aufnahme (7) in die Spielpuppe (3) integriert ist und Innenabmessungen aufweist, die Außenabmessungen des Steuergerätes (4) entsprechen und eine Innenwandung der Aufnahme (7) zumindest bereichsweise formschlüssig an einer Außenwandung des aufgenommenen Steuergerätes (4) anliegt.

8. Spielpuppe nach Anspruch 6 oder 7,
**dadurch gekennzeichnet, dass** eine Länge der Aufnahme (7) in einer Längsrichtung (L) des aufgenommenen Steuergerätes (4) so dimensioniert ist, dass das aufgenommene Steuergerät (4) mit einem Ende aus der Aufnahme (7) herausragt, an dem Sender und/oder Empfänger der Funkverbindung (5, 6) vorgesehen sind.

9. Spielpuppe nach Anspruch 6, 7 oder 8,
**dadurch gekennzeichnet, dass** die Aufnahme (7) als eine Vertiefung ausgebildet ist, in der das Steuergerät (4) passgenau Platz findet und eine Öffnung aufweist, die den Zugriff auf an einer Außenseite des aufgenommenen Steuergerätes (4) angeordnete Steuerköpfe (14) gestattet.

10. Spielpuppe nach Anspruch 6,
**gekennzeichnet durch** einen Schwanz (16) in dem eine Befestigung für einen an das Steuergerät (4) angeschlossenen Joystick (17) vorgesehen ist und der Joystick (17) über Schwanzbewegungen steuerbar ist.

11. Spielpuppe nach wenigstens einem der Ansprüche 6 bis 10,
**gekennzeichnet durch** einen an das Steuergerät (4) angeschlossenen Berührungssensor in ihrem Bauchbereich (15) zur Detektierung von Kitzelreizen.

12. Verwendung einer Bewegungssensoren aufweisenden Spielpuppe (3) nach wenigstens einem der Ansprüche 6 bis 11 als Schnittstelle zwischen einem Spieler und einer Spielkonsole (1), in die ein Spielprogramm geladen ist, zur Auslösung von Spielaktionen einer durch das Spielprogramm dargestellten Bildschirmfigur (3a).

13. Verfahren zur Durchführung eines Videospiels mit einem Videospielsystem nach wenigstens einem der Ansprüche 1 bis 5, indem:
ein Spielprogramm von einem Speichermedium in eine Spielkonsole (1) mit einem Bildschirm (2) geladen wird,
Bildschirmfiguren (3a) auf dem Bildschirm (2) mittels des Spielprogramms dargestellt werden,
ein Bewegungssensoren aufweisendes Steuergerät (4) in einer Aufnahme (7) lösbar angeordnet wird,
das Steuergerät (4) im Spielbetrieb wenigstens eine Verbindung (5, 6) zu der Spielkonsole (1) ausbildet, über die Bewegungsdaten der Bewegungssensoren übertragen werden und
**dadurch** Bewegungen der Spielpuppe (3) durch den Spieler in Spielaktionen der Bildschirmfigur (3a) übersetzt werden.

14. Verfahren nach Anspruch 13,
**dadurch gekennzeichnet, dass** die Bewegungen der Spielpuppe (3) in Echtzeit in Spielaktionen der Bildschirmfigur (3a) umgewandelt werden.

15. Verfahren nach Anspruch 13 oder 14,
**dadurch gekennzeichnet, dass** eine Anzahl von Bildschirmfiguren (3a) bestimmt wird und jeder Bildschirmfigur (3a) genau eine Spielpuppe (3) zugeordnet wird.
